# EUROPEAN PATENT APPLICATION

(11) **EP 4 023 091 A1**
(43) Date of publication of application: **06.07.2022**
(21) Application number: 20923471.5
(22) Date of filing: 12.03.2020
(51) Int. Cl.: A41D 31/102, A41D 31/12, B32B 27/12, B32B 27/36, B32B 27/40, B32B 27/02, A41D 13/008, D06M 11/45, D06M 11/74, D06M 101/32

(54) **REUSABLE PROTECTIVE CLOTHING**

(30) Priority: 02.03.2020 CN 202010135743
(71) Applicant: Shandong Juntai Medical Protective Equipment Technology Co., Ltd, Jinan, Shandong 250200 (CN)
(72) Inventor: XING, Jiehu, Jinan, Shandong 250200 (CN)
(74) Representative: Sun, Yiming
(86) International application number: PCT/CN2020/079009
(87) International publication number: WO 2021/174575

(57) **Abstract**

A reusable protective clothing, including parameters of: (1) anti-permeability water pressure being: hydrostatic pressure of a new protective clothing ≥ 1100 cm H₂0, and hydrostatic pressure after 100 times of repeated use ≥ 40 cm H₂0; (2) moisture permeability of a material used ≥ 2500 g/(m²·d),moisture permeability after 20 times of repeated use ≥ 5000 g/(m²·d),and moisture permeability after 100 times of repeated use ≥ 8000 g/(m²·d); (3) synthetic blood penetration resistance ≥ grade 2 in table 3 of GB19082-2009; (4) outer surface water spray grade ≥ grade 3; (5) breaking strength ≥ 45 N; (6) elongation at break ≥ 15%; (7) filtration efficiency for non-oily particles ≥ 70%; (8) charge amount ≤ 0.6 µC/piece; (9) static decay time ≤ 0.5 s; (10) continuous burning time ≤ 15 s, smoldering time ≤ 10 s, damage length less than 20 mm.

## Description

### TECHNICAL FIELD

The present invention relates to the field of protective clothing technologies, and is more particularly to a reusable protective clothing.

### BACKGROUND

The outbreak of novel coronavirus in Wuhan caused the infection of a certain number of people in China. During this epidemic prevention and control, disposable protective clothing had too many disadvantages, leading to the infection of a large number of medical staffs. The disadvantages are specifically as follows. 1. The disposable protective clothing itself has a very low protective level, and an impermeability to water of generally only 17 cm, which belongs to the lowest level protection. 2. The disposable protective clothing has a low material strength, and is easy to be damaged. Infected patients may pull the medical staffs implementing treatment for fear, spasm, convulsion and other reasons, leading to the damage of the protective clothing, so that the medical staffs are more likely to be infected. 3. The disposable protective clothing has a short service life, and should be replaced after 6 hours to 8 hours. 4. The disposable protective clothing has a poor permeability, and the medical staffs feel sultry and sweat after wearing for several hours, thus greatly reducing the physical energy consumption of the medical staffs, and being not beneficial for the health and treatment works of the medical staffs. 5. After use, the disposable protective clothing needs to be incinerated outside, and there is a risk of infection in every contact person during outside incineration. Carcinogens such as dioxin may be produced during incineration, leading to environmental pollution. 6. The disposable protective clothing has a high cost. 7. A disposable material may produce a lot of debris and particles during use, which float in the air as a kind of carrier of bacteria and viruses, thus becoming a transmission way. These are the deficiencies in the prior art.

### SUMMARY

The technical problem to be solved by the present invention is to provide a reusable protective clothing aiming at the deficiencies in the prior art. An impermeability to water of the protective clothing of the present invention is as high as 1100 cm or more, and an impermeability to water after 100 times of repeated use is greater than 40 cm, which is still higher than that of a disposable protective clothing. The technical solutions of the present invention are as follows.

A reusable protective clothing is provided, wherein parameters of the protective clothing comprise:
(I) a liquid rejecting function, having an anti-permeability water pressure being:
   (1) a hydrostatic pressure (cm H₂0) of a new protective clothing greater than and equal to 1100 cm H₂0, and
   (2) a hydrostatic pressure (cm H₂0) after 100 times of repeated use greater than and equal to 40 cm H₂0;
      wherein impermeability to waters of all areas of the protective clothing of the invention all reach the above standards;
/(II) a moisture permeability of a medical composite material used in the protective clothing being:
   (1) a moisture permeability greater than and equal to 2500 g/(m²·d),
   (2) a moisture permeability after 20 times of repeated use greater than and equal to 5000 g/(m²·d), and
   (3) a moisture permeability after 100 times of repeated use greater than and equal to 8000 g/(m²·d);
/(III) a synthetic blood penetration resistance being:
   a synthetic blood penetration resistance of the protective clothing not lower than grade 2 in table 3 of GB19082-2009;
/(IV) a surface moisture resistance being:
   an outer surface water spray grade of the protective clothing not lower than grade 3;
/(V) a breaking strength being:
   a breaking strength of a material of the protective clothing not less than 45 N;
/(VI) an elongation at break being:
   an elongation at break of the material of the protective clothing not less than 15%;
/(VII) a filtration efficiency being:
   a filtration efficiency for non-oily particles of the material of the protective clothing and a seam not less than 70%;
/(VIII) an antistatic property being:
   a charge amount of the protective clothing not greater than 0.6 µC/piece;
/(IX) a static decay property being:
   a static decay time of the protective clothing not exceeding 0.5 s; and
/(X) a continuous burning time of the protective clothing less than or equal to 15 s, a smoldering time of the protective clothing less than or equal to 10 s, and a damage length of the protective clothing less than 20 mm.

The "*I*" in the above parameters (I)/(II)/(III)/(IV)/(V)/(VI)/(VII)/(VIII)/(IX) refers to "and/or".

The present invention is the reusable protective clothing prepared with the medical composite material, wherein a manufacturing process of the medical composite material comprises the following specific steps of:
(1) manufacturing a flame-retardant polyester filament fiber, comprising:
   reducing a hardness and a smoothness of a surface of the polyester filament fiber by an air deformation process, immersing the processed polyester filament fiber in a flame-retardant finishing solution, and then depositing and crosslinking a flame retardant on a fabric by a pre-baking and baking processes to obtain the flame-retardant polyester filament fiber, wherein the polyester filament fiber is a polyethylene terephthalate (PET) filament fiber;
   a main ingredient of the flame-retardant finishing solution is a modified aluminum hydroxide flame retardant; and a preparation method of the modified aluminum hydroxide flame retardant comprises: preparing aluminum hydroxide gel by a carbon decomposition method first, and then hydrothermally modifying the gel by a hydrothermal synthesis method, which is namely the modified aluminum hydroxide flame retardant;
(2) manufacturing a conductive filament fiber, comprising:
   using a polyester filament fiber with a circular section, fully infiltrating carbon ions into the polyester filament fiber; and then, attaching and fixing the carbon ions on a surface of the fiber by a coating process, with a thickness of about 1 micron;
(3) weaving the polyester filament fiber obtain in step (1) and the conductive filament fiber obtained in step (2) into a textile material with an antistatic function, with conductive filaments spaced by 1 cm;
(4) manufacturing a bacterium rejecting film, comprising:
   manufacturing a thin film with a thickness of 0.012 mm to 0.035 mm with polyurethane (PU) to obtain the bacterium rejecting film; wherein:
   a structure of the bacterium rejecting film is: 1.395 billion micropores per square centimeter, wherein a pore size of each micropore is 280 nm; and in the present invention, the pore size of the micropores is 2000 times smaller than a diameter of a liquid water molecular group of 0.1 mm to 7 mm, and is 70 times greater than a diameter of a vapor water molecular group of 3 nm to 4 nm; and
(5) manufacturing the medical composite material, comprising:
   forming upper and lower layers with the textile material obtained in step (3), and a middle layer with the bacterium rejecting film, and compositing the three layers of materials by a polyester glue roll coating composite process to obtain the medical composite material.

In addition, all suture parts are pasted with a waterproof adhesive tape during manufacturing of the reusable protective clothing of the present invention.

Compared with the prior art, the present invention has the following advantages.
(1) A core protective index of the protective clothing is the impermeability to water, the disposable protective clothing is only 17 cm, the medical composite material used in the present invention is a new material with functions of water resistance, body fluid resistance, pollution resistance, air permeability and bacterium rejection, the impermeability to water is as high as 1100 cm or more, the protective clothing is sent to INTERTEK, a global authoritative testing organization, in U.K. for testing after 20 times and 100 times of washing respectively, results show that the impermeability to water after 20 times of washing is greater than 800 cm, and the moisture permeability is greater than 9000 g (a standard of 2500 g); and a lowest impermeability to water is 85 cm after 100 times of washing, and the moisture permeability exceeds 10000 g.
(2) The present invention is reusable. With the spare reusable protective clothing, medical staffs do not have to worry about infection caused by untimely supply of the protective clothing, and meanwhile, physiological problems of the medical staffs are solved, so that the medical staffs do not need to suffer from urine suppression and paper diaper.
(3) The present invention improves the moisture permeability of the protective clothing, and sweat of the medical staffs can be permeated out, thus greatly reducing physical energy consumption of the medical staffs, and being beneficial for health and treatment works of the medical staffs.
(4) A washing, disinfection and sterilization space may be arranged inside a hospital to realize a closed loop of internal recycling in the hospital, thus preventing a secondary multi-link virus transmission caused by outside washing and disinfection.
(5) A single use cost of the protective clothing of the present invention is lower, thus saving a great deal of medical resources for the country.

### DETAILED DESCRIPTION

To make the purposes, features and advantages of the present invention more obvious and easier to understand, the technical solutions protected by the present invention are clearly and completely described hereinafter with reference to the specific embodiments and the drawings. Apparently, the embodiments described hereinafter are only some but not all of the embodiments of the present invention. Based on the embodiments in the patent, all other embodiments obtained by those of ordinary skills in the art without going through any creative work should fall within the scope of protection of the patent.

### Embodiment 1: reusable protective clothing

Parameters of the protective clothing comprise:
(I) a liquid rejecting function, having an anti-permeability water pressure (GB/T 4744-2013 (60 cm H²O/min, water temperature: 20°C)) being:
   (1) a hydrostatic pressure (cm H₂0) of a new protective clothing greater than and equal to 1100 cm H₂0, and
   (2) a hydrostatic pressure (cm H₂0) after 100 times of repeated use greater than and equal to 40 cm H₂0;
      wherein, impermeability to waters of all areas of the protective clothing of the invention all reaches the above standards;
/(II) a moisture permeability of a medical composite material used in the protective clothing (GB/T 12704.2-2009 f method B (temperature: 38°C, relative moisture: 50%)) being:
   (1) a moisture permeability greater than and equal to 2500 g/(m²·d),
   (2) a moisture permeability after 20 times of repeated use greater than and equal to 5000 g/(m²·d), and
   (3) a moisture permeability after 100 times of repeated use greater than and equal to 8000 g/(m²·d);
/(III) a synthetic blood penetration resistance being:
   a synthetic blood penetration resistance of the protective clothing not lower than grade 2 in table 3 of GB19082-2009;
/(IV) a surface moisture resistance being:
   an outer surface water spray grade of the protective clothing not lower than grade 3;
/(V) a breaking strength being:
   a breaking strength of a material of the protective clothing not less than 45 N;
/(VI) an elongation at break being:
   an elongation at break of the material of the protective clothing not less than 15%;
/(VII) a filtration efficiency being:
   a filtration efficiency for non-oily particles of the material of the protective clothing and a seam not less than 70%;
/(VIII) an antistatic property being:
   a charge amount of the protective clothing not greater than 0.6 µC/piece;
/(IX) a static decay property being:
   a static decay time of the protective clothing not exceeding 0.5 s; and
/(X) a continuous burning time of the protective clothing less than or equal to 15 s, a smoldering time of the protective clothing less than or equal to 10 s, and a damage length of the protective clothing less than 20 mm.

### Embodiment 2: reusable protective clothing

The protective clothing is prepared with the medical composite material, wherein a manufacturing process of the medical composite material comprises the following specific steps of:
(1) manufacturing a flame-retardant polyester filament fiber, comprising:
   reducing a hardness and a smoothness of a surface of the polyester filament fiber by an air deformation process, immersing the processed polyester filament fiber in a flame-retardant finishing solution, and then depositing and crosslinking a flame retardant on a fabric by a pre-baking and baking processes to obtain the flame-retardant polyester filament fiber, wherein the polyester filament fiber is a polyethylene terephthalate (PET) filament fiber;
   a main ingredient of the flame-retardant finishing solution is a modified aluminum hydroxide flame retardant; and a preparation method of the modified aluminum hydroxide flame retardant comprises: preparing aluminum hydroxide gel by a carbon decomposition method first, and then hydrothermally modifying the gel by a hydrothermal synthesis method, which is namely the modified aluminum hydroxide flame retardant;
(2) manufacturing a conductive filament fiber, comprising:
   using a polyester filament fiber with a circular section, fully infiltrating carbon ions into the polyester filament fiber; and then, attaching and fixing the carbon ions on a surface of the fiber by a coating process, with a thickness of about 1 micron;
(3) weaving the polyester filament fiber obtain in step (1) and the conductive filament fiber obtained in step (2) into a textile material with an antistatic function, with conductive filaments spaced by 1 cm;
(4) manufacturing a bacterium rejecting film, comprising:
   manufacturing a thin film with a thickness of 0.012 mm to 0.035 mm with polyurethane (PU) to obtain the bacterium rejecting film; wherein:
   a structure of the bacterium rejecting film is: 1.395 billion micropores per square centimeter, wherein a pore size of each micropore is 280 nm; and in the present invention, the pore size of the micropores is 2000 times smaller than a diameter of a liquid water molecular group of 0.1 mm to 7 mm, and is 70 times greater than a diameter of a vapor water molecular group of 3 nm to 4 nm; and
(5) manufacturing the medical composite material, comprising:
   forming upper and lower layers with the textile material obtained in step (3), and a middle layer with the bacterium rejecting film, and compositing the three layers of materials by a polyester glue roll coating composite process to obtain the medical composite material.

### Experimental example:

An overall cost of the protective clothing of the present invention is generally within 2000 Yuan, and the protective clothing may be used repeatedly for 100 times, with a single use cost of 20 Yuan. After mass production, a comprehensive cost is reduced, and the single use cost may be about 15 Yuan.

The various embodiments in the specification are described in a progressive manner. Each embodiment focuses on the differences from the other embodiments, and the same and similar parts between the various embodiments may be referred to each other.

The above descriptions of the disclosed embodiments enable those skilled in the art to implement or use the present invention. Many modifications to these embodiments will be apparent to those skilled in the art, and general principles defined herein may be implemented in other embodiments without departing from the spirit or scope of the present invention. Therefore, the present invention will not be limited to these embodiments shown herein, but should comply with the widest scope consistent with the principles and the novel and inventive features disclosed herein.

## Claims

1. A reusable protective clothing, wherein parameters of the protective clothing comprise:
(I) a liquid rejecting function, having an anti-permeability water pressure being:
(1) a hydrostatic pressure (cm H₂0) of a new protective clothing greater than and equal to 1100 cm H₂0, and
(2) a hydrostatic pressure (cm H₂0) after 100 times of repeated use greater than and equal to 40 cm H₂0;
/(II) a moisture permeability of a medical composite material used in the protective clothing being:
(1) a moisture permeability greater than and equal to 2500 g/(m²·d),
(2) a moisture permeability after 20 times of repeated use greater than and equal to 5000 g/(m²·d), and
(3) a moisture permeability after 100 times of repeated use greater than and equal to 8000 g/(m²·d);
/(III) a synthetic blood penetration resistance being:
a synthetic blood penetration resistance of the protective clothing not lower than grade 2 in table 3 of GB19082-2009;
/(IV) a surface moisture resistance being:
an outer surface water spray grade of the protective clothing not lower than grade 3;
/(V) a breaking strength being:
a breaking strength of a material of the protective clothing not less than 45 N;
/(VI) an elongation at break being:
an elongation at break of the material of the protective clothing not less than 15%;
/(VII) a filtration efficiency being:
a filtration efficiency for non-oily particles of the material of the protective clothing and a seam not less than 70%;
/(VIII) an antistatic property being:
a charge amount of the protective clothing not greater than 0.6 µC/piece;
/(IX) a static decay property being:
a static decay time of the protective clothing not exceeding 0.5 s; and
/(X) a continuous burning time of the protective clothing less than or equal to 15 s, a smoldering time of the protective clothing less than or equal to 10 s, and a damage length of the protective clothing less than 20 mm.

2. The reusable protective clothing according to claim 1, prepared with the medical composite material, wherein a manufacturing process of the medical composite material comprises the following specific steps of:
(1) manufacturing a flame-retardant polyester filament fiber, comprising:
reducing a hardness and a smoothness of a surface of the polyester filament fiber by an air deformation process, immersing the processed polyester filament fiber in a flame-retardant finishing solution, and then depositing and crosslinking a flame retardant on a fabric by a pre-baking and baking processes to obtain the flame-retardant polyester filament fiber;
(2) manufacturing a conductive filament fiber, comprising:
using a polyester filament fiber with a circular section, fully infiltrating carbon ions into the polyester filament fiber; and then, attaching and fixing the carbon ions on a surface of the fiber by a coating process, with a thickness of about 1 micron;
(3) weaving the polyester filament fiber obtain in step (1) and the conductive filament fiber obtained in step (2) into a textile material with an antistatic function, with conductive filaments spaced by 1 cm;
(4) manufacturing a bacterium rejecting film, comprising:
manufacturing a thin film with a thickness of 0.012 mm to 0.035 mm with polyurethane (PU) to obtain the bacterium rejecting film;
(5) manufacturing the medical composite material, comprising:
forming upper and lower layers with the textile material obtained in step (3), and a middle layer with the bacterium rejecting film, and compositing the three layers of materials by a polyester glue roll coating composite process to obtain the medical composite material.

3. The reusable protective clothing according to claim 2, wherein in the step (1), the polyester filament fiber is a polyethylene terephthalate (PET) filament fiber.

4. The reusable protective clothing according to claim 2, wherein in the step (1), a main ingredient of the flame-retardant finishing solution is a modified aluminum hydroxide flame retardant.

5. The reusable protective clothing according to claim 4, wherein in the step (1), a preparation method of the modified aluminum hydroxide flame retardant comprises:
preparing aluminum hydroxide gel by a carbon decomposition method first, and then hydrothermally modifying the gel by a hydrothermal synthesis method, which is namely the modified aluminum hydroxide flame retardant.

6. The reusable protective clothing according to claim 2, wherein in the step (1), a structure of the bacterium rejecting film is: 1.395 billion micropores per square centimeter, wherein a pore size of each micropore is 280 nm.

7. The reusable protective clothing according to any one of claims 1-6, wherein all suture parts are pasted with a waterproof adhesive tape during manufacturing.
